# EUROPEAN PATENT APPLICATION

(11) **EP 2 833 679 A1**
(43) Date of publication of application: **04.02.2015**
(21) Application number: 13178814.3
(22) Date of filing: 31.07.2013
(51) Int. Cl.: H04W 52/02, H04W 68/02, H04W 84/04, H04W 84/12

(54) **Time-Slotted Wireless Communication Utilizing Dual Frequencies in a tree-topology wireless network**

(71) Applicant: M²Communication, Inc., Zhubei City, Hsinchu County 302 (TW)
(72) Inventor: Chen, Chun-Yu, 302 Zhubei City (TW); Hsu, Chiao-Chun, 302 Zhubei City (TW); Lin, Yu-Jen, 302 Zhubei City (TW); Wei, Chun-Kai, 302 Zhubei City (TW)
(74) Representative: Towlson, Samantha Jayne

(57) **Abstract**

A wireless network system utilizing dual frequencies comprises an access point having a first communication module, wherein the first communication module transmits downlink data and receives uplink data wirelessly in a first frequency; a plurality of routers, each having a second communication module, wherein the second communication module receives the downlink data from the access point and transmits the uplink data to the access point wirelessly in the first frequency and transmits the downlink data and receives the uplink data wirelessly in a second frequency; and a plurality of end devices, each having a third communication module, wherein the third communication module receives the downlink data from one of the plurality of routers and transmits the uplink data to the same one of the plurality of routers wirelessly in the second frequency.

## Description

### FIELD OF THE INVENTION

The present invention relates generally to the field of communication system, method and apparatus in wireless network or wireless sensor network. More specifically, the present invention relates to a communication system that involves the control of a plurality of end nodes, such as the control of electronic shelf labels (ESL), personal locating tags, or LED lighting devices.

### BACKGROUND OF THE INVENTION

Current system design of wireless network or wireless sensor network with regard to the control of a plurality of end nodes (end devices) involves several considerations. To begin with, a network topology usually needs to be well designed to accommodate the activities of at least 16000 end nodes. Following the point mentioned above, the network topology needs to be well designed to cover all the areas that end nodes locate. Moreover, the end nodes usually use battery as main power, so the system design needs to save as much power of the end nodes as possible.

Another important point is that, since all the devices in the network topology equip the receiving and transmitting functions, the system needs to be well designed to decrease the overall transmission time, especially in the situation that a large amount of end nodes cost much transmission time more than expected. Also, a simple receiving mechanism design of the system should be able to arrange adequate routing paths to help upper nodes receive the data from lower nodes, such as end nodes. Last but not least, the system needs to be well designed to acknowledge whether all the lower nodes successfully transmit the data in an expectable management time, so that the back-end management system can effectively manage in some application fields, such as hypermarket management or warehouse management.

Regarding the aforementioned considerations, ZigBee is a specification for a suite of high level communication protocols using small, low-power digital radios based on an IEEE 802.15.4. Zigbee utilizes single frequency of 2.4 GHz and accommodate at most 65,536 nodes (devices), with the communication range of each node reaching 100m in an open space. In addition, Zigbee adopts CSMA/CA (Carrier Sense Multiple Access with Collision Avoidance).

However, in one aspect of data transmission, CSMA/CA cannot estimate the transmission time and may have the problem of hidden node collision. In another aspect of data transmission, the receiving mechanism is complex for the coordinator to plan the network, such as C-skip mechanism. Therefore, Zigbee is not suitable for estimating single transaction time (an expectable management time for successfully transmitting the data), and the end nodes keep consuming more power.

In view of the above, what is needed is to design a communication system, method and apparatus to effectively manage transaction time and to save more battery power of end nodes.

### BRIEF SUMMARY OF THE INVENTION

The invention provides a wireless network system, a method and a router utilizing dual frequency in the application field of wireless network or wireless sensor network.

In one embodiment, the system employing dual frequencies mechanism comprises: an access point having a first communication module, wherein the first communication module transmits downlink data and receives uplink data wirelessly in a first frequency; a plurality of routers, each having a second communication module, wherein the second communication module (1) receives the downlink data from the access point and transmits the uplink data to the access point wirelessly in the first frequency and (2) transmits the downlink data and receives the uplink data wirelessly in a second frequency; and a plurality of end devices, each having a third communication module, wherein the third communication module receives the downlink data from one of the plurality of routers and transmits the uplink data to the same one of the plurality of routers wirelessly in the second frequency, and wherein an internal network is formed by the access point, the plurality of routers and the plurality of end devices, with the access point being a parent node of the routers and each of the routers being a parent node of a subgroup of the plurality of end devices, forming a two-layer tree network topology.

In one embodiment, the method utilizes dual frequencies to transmit downlink data under TDMA mechanism that divides a round period into at least a first period and a second period, each of the periods having multiple time slots. The method comprising: a) wirelessly broadcasting an AP beacon from an access point to a plurality of routers in a first period of a first round period, the AP beacon containing a first element sequence of downlink slot assignment and broadcasted in a first frequency; b) wirelessly transmitting the downlink data from the access point to one of the routers in each of the time slots of a second period of the first round period according to the first element sequence of downlink slot assignment, the downlink data transmitted in the first frequency; c) wirelessly broadcasting a router beacon from one of the routers to the router's end devices in a first period of a second round period, the router beacon containing a second element sequence of downlink slot assignment and broadcasted in a second frequency; and d) wirelessly transmitting the downlink data from one of the routers to one of the router's end devices in each of the time slots of a second period of the second round period according to the second element sequence of downlink slot assignment, the downlink data transmitted in the second frequency.

In one embodiment, the router is in a wireless network system utilizing dual frequencies and comprises: a communication module wirelessly communicating with an access point and at least one end device, wherein the communication module (1) wirelessly receives downlink data from the access point in a first frequency and (2) wirelessly transmits the downlink data to the at least one end device in a second frequency; a memory; and a control module electrically connected the communication module and the memory, wherein the control module is configured to buffer the downlink data in the memory.

It should be understood, however, that this summary may not contain all aspects and embodiments of the present invention, that this summary is not meant to be limiting or restrictive in any manner, and that the invention as disclosed herein will be understood by one of ordinary skill in the art to encompass obvious improvements and modifications thereto.

### BRIEF DESCRIPTION OF THE DRAWINGS

The accompanying drawings illustrate one or more embodiments of the invention and together with the written description, serve to explain the principles of the invention. Wherever possible, the same reference numbers are used throughout the drawings to refer to the same or like elements of an embodiment, and wherein:

FIG. 1 is a schematic illustration of the network topology according to one embodiment of the present invention;

FIG. 2 is a timing diagram of the time-slotted wireless communication system according to one embodiment of the present invention;

FIG. 3 is a schematic illustration of the network scan and join process according to one embodiment of the present invention;

FIGs. 4a∼4d are a series of diagrams illustrating various frame formats utilized in the network topology according to one embodiment of the present invention;

FIG. 5 is a diagram illustrating a format of Network ID according to one embodiment of the present invention;

FIG. 6 is a timing diagram of beacon transmission according to one embodiment of the present invention;

FIG. 7a is a timing diagram of multiple beacon transmission according to one embodiment of the present invention;

FIG. 7b is a timing diagram of multiple beacon transmission according to another embodiment of the present invention;

FIGs. 8a∼8b are a series of timing diagrams that illustrate wake-up duration and calibration of an ED based on multiple beacon transmission according to one embodiment of the present invention.

FIG. 9 is a timing diagram of null beacon transmission according to one embodiment of the present invention;

FIG. 10a∼10d are a series of schematic illustration of TDMA mechanism for downlink transmission in dual frequencies according to one embodiment of the present invention;

FIG. 11 is the flow chart of Router Slot Assignment algorithm according to one embodiment of the present invention.

FIG. 12 is a schematic illustration of an ESL system utilizing time-slotted wireless Communication in dual frequencies according to one embodiment of the present invention.

In accordance with common practice, the various described features are not drawn to scale and are drawn to emphasize features relevant to the present disclosure. Like reference characters denote like elements throughout the figures and text.

### DETAILED DESCRIPTION OF THE INVENTION

The present invention will now be described more fully hereinafter with reference to the accompanying drawings, in which exemplary embodiments of the invention are shown. This invention may, however, be embodied in many different forms and should not be construed as limited to the embodiments set forth herein. Rather, these embodiments are provided so that this disclosure will be thorough and complete, and will fully convey the scope of the invention to those skilled in the art. Like reference numerals refer to like elements throughout.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising," or "includes" and/or "including" or "has" and/or "having" when used herein, specify the presence of stated features, regions, integers, steps, operations, elements, and/or components, but do not preclude the presence or addition of one or more other features, regions, integers, steps, operations, elements, components, and/or groups thereof.

It will be understood that the term "and/or" includes any and all combinations of one or more of the associated listed items. It will also be understood that, although the terms first, second, third etc. may be used herein to describe various elements, components, regions, parts and/or sections, these elements, components, regions, parts and/or sections should not be limited by these terms. These terms are only used to distinguish one element, component, region, part or section from another element, component, region, layer or section. Thus, a first element, component, region, part or section discussed below could be termed a second element, component, region, layer or section without departing from the teachings of the present invention.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and the present disclosure, and will not be interpreted in an idealized or overly formal sense unless expressly so defined herein.

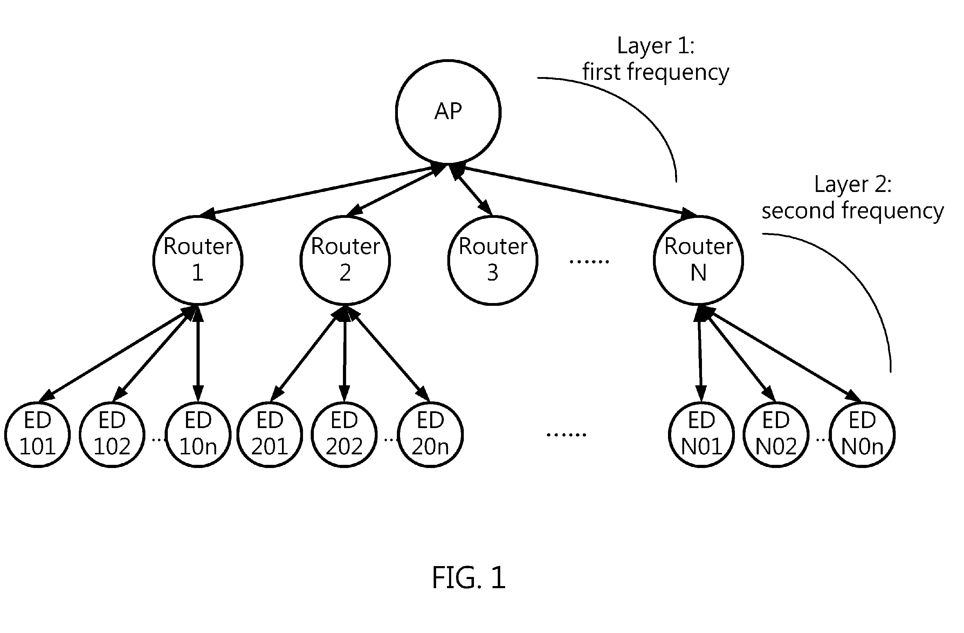

The description will be made as to the embodiments of the present invention in conjunction with the accompanying drawings in FIGS. 1∼12. Reference will be made to the drawing figures to describe the present invention in detail, wherein depicted elements are not necessarily shown to scale and wherein like or similar elements are designated by same or similar reference numeral through the several views and same or similar terminology.

A time-slotted wireless communication method and system that utilizes dual frequencies to effectively manage transaction time and to reduce power consumption of end nodes is described herein.

Network Typology

FIG. 1 is a schematic illustration of the network topology of the time-slotted communication system according to one embodiment of the present invention. Referring to FIG. 1, the network topology is a two-layer tree. The parent node of Layer 1 is AP (access point), the roof node of the network topology. AP is defined to control the whole network of the time-slotted communication system and is responsible to allocate resources as well as transmit or receive data. In addition, AP is able to equip WiFi module and/or TCP/IP module to connect with the back-end management system. In another point of view, it means that the network of the time-slotted communication system (hereinafter referred to as internal network) can connect with the Internet. Router 1 to Router N are the child nodes of Layer 1 as well as the parent nodes of Layer 2, and EDs (End Device) 101∼10n, 201∼20n...N01∼N0n are the child nodes of Layer 2 as well as the leaf nodes (end nodes) in the network topology. EDs are able to represent many kinds of end devices, such as electronic shelf labels (ESL), personal locating labels, or LED devices in a lighting control system.

In the aforementioned network topology, AP is able to connect with the network topology with the Internet and is able to transmit the data from the internal network to the Internet/back-end management system or from the Internet/back-end management system to the internal network. For example, in a electronic shelf label system, the back-end management system may transmit a large amount of data (such as prices of the merchandise items) to the internal network, and AP is responsible for collecting the data, in a way of buffer, and then transmit the data to the lower nodes, Routers 1∼N, step by step in different time slots. The reason why AP can be a buffer is that, usually the transmission rate of Internet is higher than that of the internal network. In addition, AP is able to transmit AP Beacon and let all the lower nodes in Layer 1, such as Routers 1∼N or a repeater, to know the existence of the internal network and identify the internal network afterwards. Moreover, AP Beacon arranges that, in each of the time slots, AP should transmit the data to a specific lower node in Layer 1 (such as one of Routers 1∼N or a repeater) or receive the data transmitted from a specific lower node in Layer 1.

In the aforementioned network topology, Routers 1∼N are able to transmit the downlink data from AP to EDs and receive the uplink data from EDs to AP. In addition, Routers 1∼N are able to handle the activities of scan and join process when the internal network is initially formed. Also, Routers 1∼N are able to transmit Router Beacon and let all the lower nodes in Layer 2, such as EDs, to know the existence of the internal network and identify the internal network afterwards. Specifically, EDs 101∼10n are the lower nodes of Router 1, and EDs 201∼20n are the lower nodes of Router 2, EDs N01∼N0n are the lower nodes of Router N, etc. In addition, Router Beacon arranges that, in each of the time slots, a specific router should transmit the data to a specific lower node in Layer 2 (such as transmitting the data from Router 2 to ED 201) or receive the data transmitted from a specific lower node in Layer 2. Each router will create its own router beacon.

In the aforementioned network topology, each of the EDs is able to receive Router Beacon from their parent router and wakes up to transmit or receive the data in certain time slots corresponding to the indication of Router Beacon.

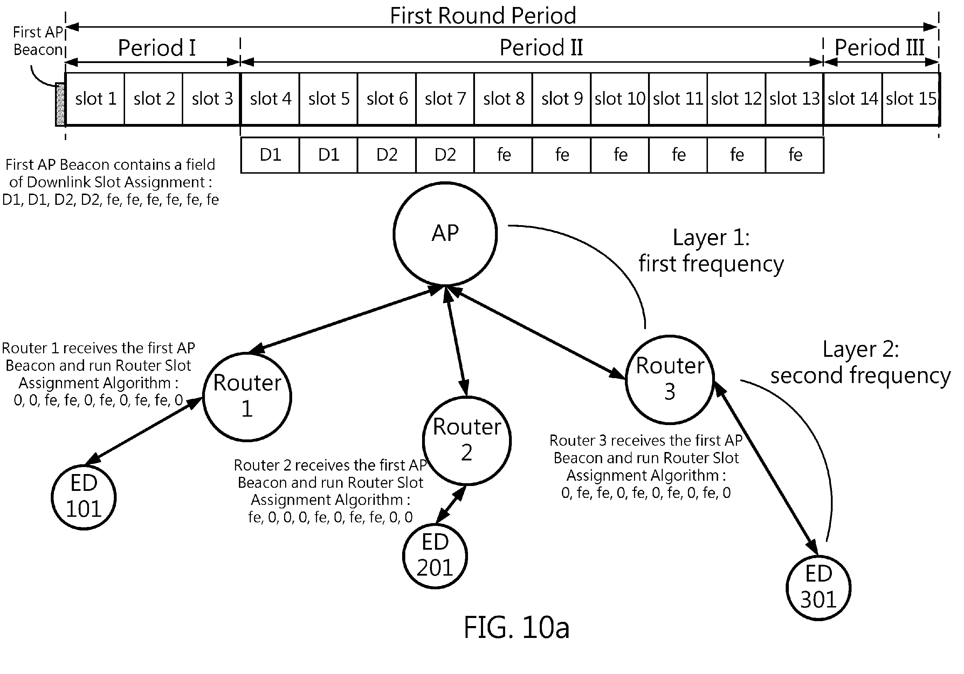

In the aforementioned network topology, Layer 1 adopts a first frequency to connect AP with Routers 1∼N, and Layer 2 adopts a second frequency to connect Routers 1∼N with their own lower nodes, such as Router 1 connected with EDs 101∼10n. The first frequency and the second frequency (hereinafter referred to as dual frequencies) belong to the same band of 900MHz, with one ranging from 902∼915MHz and the other ranging from 916∼927MHz. It should be noticed that the band of 900MHz ranges from 902 MHz to 928 MHz. One advantage of the adoption of the band of 900MHz is that the communication range of 900MHz is 400m, longer than the communication range of 2.4 GHz, 100m (Zigbee utilizes 2.4GHz). Thus, the communication range of each of the devices in the internal network is 400m, and the whole area coverage becomes much larger than the area coverage of Zigbee, if both of the internal network and Zigbee have the same amount of devices. In addition, the adoption of the band of 900MHz can be replaced by the band of 400MHz or 800MHz. Also, it should be noticed that the band of 400 MHz ranges from 433.05 MHz to 434.79 MHz and the band of 800MHz ranges from 866 MHz to 868 MHz. Another advantage is that the adoption of dual frequencies can improve system performance, doubling the transmission rate of the internal network. More details are described in the following paragraphs of Figs. 10a∼d.

Time-Slotted Mechanism

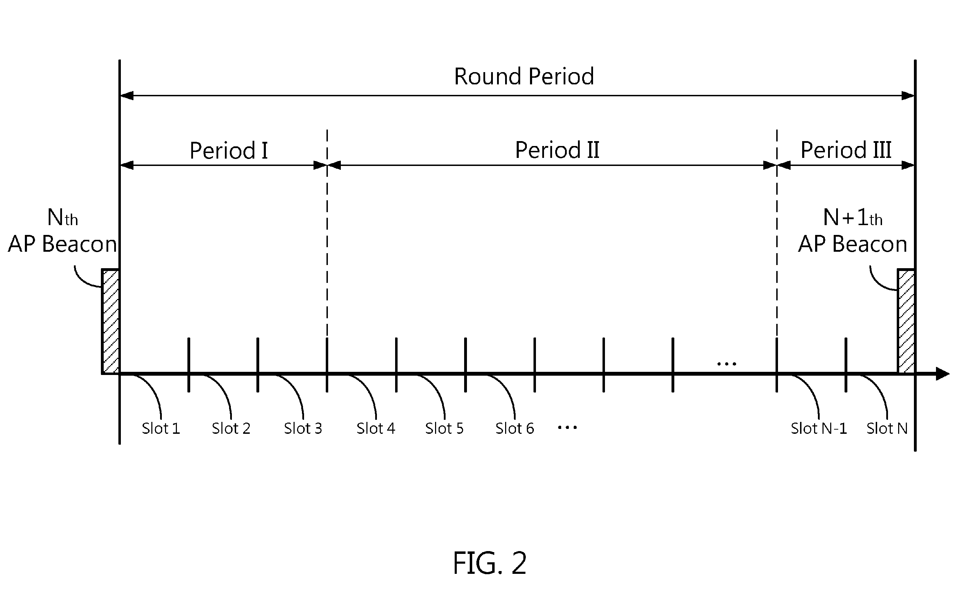

FIG. 2 is a timing diagram of the time-slotted wireless communication system according to one embodiment of the present invention. Referring to FIG. 2, each AP Beacon is transmitted after N time slots, such as Slot 1 to Slot N, and Round Period is thus defined as the duration between N^{th} AP Beacon (the last AP Beacon) and N+1^{th} AP Beacon (the present AP Beacon). The start point of Round Period can be the end point of N^{th} AP Beacon and the end point of Round Period can be the end point of N+1^{th} AP Beacon. However, the start point of Round Period can be the start point of N^{th} AP Beacon and the end point of Round Period can be the start point of N+1^{th} AP Beacon as well. Each time slot represents an amount of time, and the time slot is a time unit for Round Period to calculate its duration. The duration of Round Period may be seconds, minutes, or even hours, which depends on the application it involves in.

In, FIG. 2, Round Period is split into three periods: Period I (the first period), Period II (the second period), and Period III (the third period). Period I is the duration for child nodes to receive beacon information from the parent nodes. For example, each ED can receive Router Beacon broadcasted by its parent node (a router or a repeater) in any time slot of Period I. Also, each router can receive AP Beacon broadcasted by AP in any time slot of Period I.

Period II is the duration for child nodes to mainly receive data transmitted from the parent nodes. Specifically, Period II utilizes the concept of TDMA (Time Division Multiple Access) to mainly transmit the downlink data from AP to the routers or from each of the routers to its EDs, with each time slot only assigned to a specific child node to receive the downlink data transmitted from its parent node in each layer. For example, if Slot 4 is assigned for AP to transmit the downlink data to Router 1, other routers cannot use Slot 4 to receive the downlink data from AP. The adoption of TDMA in downlink transmission of Period II is suitable for the internal network to transmit the downlink data from AP to the routers or from each of the routers to the router's EDs, especially when the length of the downlink data is long and the amount of the downlink data is large. For example, in an ESL system, the information of the downlink data may include the barcodes, prices, names, logos, figures of the merchandise items and thus each ESL usually needs at least 2400 Bytes to update the information on its display.

Though Period II utilizes the concept of TDMA to mainly transmit the downlink data from AP to the routers or from each of the routers to its EDs, Period II is able to transmit the uplink data to AP from the routers or to each of the routers from the router's EDs if some time slots in Period II need not to be used to transmit the downlink data. Under this condition, Period II utilizes the concept of CSMA/CA to transmit the uplink data.

Period III is duration for child nodes to transmit the uplink data to the parent nodes, and Period III utilizes the concept of CSMA/CA to transmit the uplink data to AP from the routers or to each of the routers from the router's EDs. For example, referring to FIG. 2, in Slot N-1 and Slot N, Routers 1∼N utilize CSMA/CA to transmit the uplink data to AP in the first frequency, and each of the EDs 101∼10N, 201∼20N, ...N01∼N0n utilize CSMA/CA to transmit the uplink data to their parent Routers 1∼N, respectively, in the second frequency. The adoption of CSMA/CA in uplink transmission of Period III is suitable for the internal network to transmit the uplink data to AP from the routers or to each of the routers from the router's EDs, especially when the length of the uplink data is short and the amount of the downlink data is small. For example, in an ESL system, the uplink data of each ED is usually within 128 Bytes, 1/10 times of the downlink data of the ESL system.

In Round Period, the number of the time slots in each of Period I, Period II and Period III is adjustable respectively. For example, in an ESL system, the total time slots of Round Period can be 127, and Period I may have 2∼5 time slots for beacon broadcasting. As to Period II and Period III, Period II may have 2∼40 time slots and Period III can have the remaining time slots.

Network Scan/Join Process

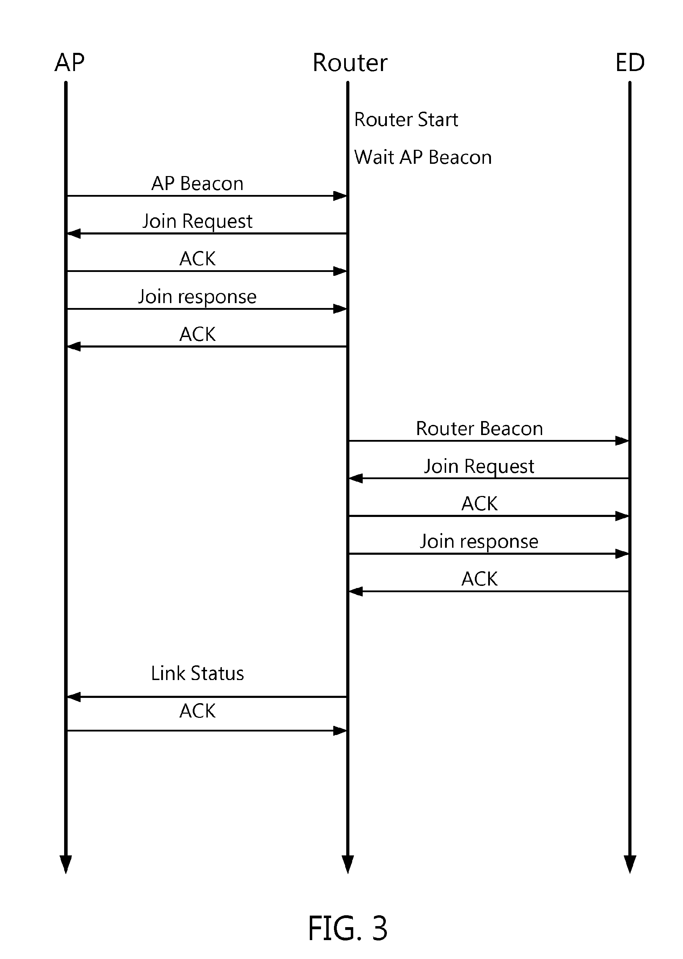

FIG. 3 is a schematic illustration of the network scan and join process according to one embodiment of the present invention. Referring to FIG. 3, all the devices, including the routers and the EDs, need to go through this process to scan and join the internal network. The communication between AP and each of Routers 1∼N is in Layer 1, and the communication between each of Routers 1∼N and the router's child EDs is in Layer 2. In Layer 1, the router starts passively searches AP Beacon without sending packets to trigger its parent node to transmit data. Namely, the router is scanning AP Beacon. After scanning AP Beacon, the router transmits join request to AP in an assigned time slot of Period III, and the assigned time slot is assigned according to the payload of AP Beacon. After receiving join request, AP sends ACK packets to the router. Then, AP selects a Router ID to transmit back to the router, and this action represents join response. After receiving join response, the router sends ACK packets to AP.

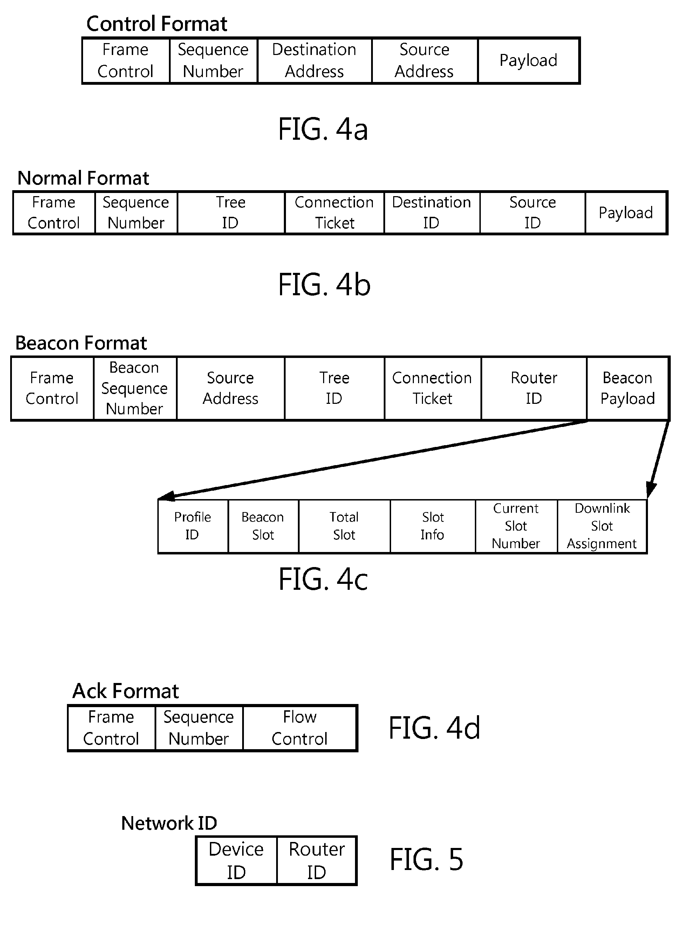

In Layer 2, the ED starts passively searches Router Beacon without sending packets to trigger its parent node to transmit data. Namely, the ED is scanning Router Beacon. After scanning Router Beacon, the ED transmits join request to the router in an assigned time slot of Period III, and the assigned time slot is assigned according to the payload of Router Beacon. After receiving join request, the router sends ACK packet to the ED. Then, the router selects a Device ID to transmit back to the ED, and this action represents join response. After receiving join response, the ED sends ACK packages to the router, and the router transmit link status to inform AP of the successful connection between the router and the ED. After receiving link status, the AP sends ACK packets to the router. More details of the Router ID and the Device ID are described in the following paragraphs of FIG. 5.

Frame Formats

FIGs. 4a∼4d are a series of diagrams illustrating various frame formats utilized in the network topology according to one embodiment of the present invention. Referring to FIGs. 4a∼4d, there are at least 4 major MAC frame formats defined: Control Frame, Normal Frame, Beacon Frame and ACK Frame.

Referring to FIG. 4a, Control Frame is used for connection construction and topology setup. There are at least 5 fields in Control Frame: Frame Control, Sequence Number, Destination Address, Source Address, and Payload. The field of Frame Control defines the frame type. For example, Bits 0∼2 can represent frame type, and 000 can be defined as Beacon Frame, 001 can be defined as Normal Frame, 010 can be defined as ACK Frame, and 011 can be defined as Control Frame. In addition, the field of Frame Control has another bit indicating whether the security is applied to the frame. Moreover, the field of Frame Control has other bits indicating whether the packet requires acknowledgement or needs frame compatibility check. Next, the field of Sequence Number is used to detect whether the packet is transmitted repeatedly, which happens when the ACK packet sent by a node is lost and thus the node receive repeated packets. The field of Source Address is used to indicate sender address and the field of Destination Address used to indicate receiver address.

Referring to FIG. 4b, Normal Frame is used to transmit the downlink and uplink data after connection construction and topology setup. There are at least 7 fields in Normal Frame: Frame Control, Sequence Number, Tree ID, Connection Ticket, Destination ID, Source ID, and Payload. Frame Control and Sequence Number of Normal Frame is the same as those of Control Frame. The field of Tree ID is used to indicate different tree topologies. The field of Connection Ticket is used for connection maintenance. A router can choose a unique connection ticket after joining the internal network. The router makes sure the connection ticket is unique by increasing the bit of the connection ticket every time the router restarts, and the length of Connection Ticket can be 1 Byte. Also, the router can make sure the connection ticket is a unique by randomly choosing the bit of the connection ticket every time the router restarts. When getting a normal packet with a mismatched connection ticket, the router will set the ticket error bit in the corresponding packet, so that the ED knows the connection is lost. Destination ID of Normal Frame can be the same as that of Control Frame. Also, Source ID of Normal Frame can be the same as that of Control Frame.

In addition, Destination ID of Normal Frame is able to adopt the format of Network ID, instead. Similarly, Source ID of Normal Frame is able to adopt the format of Network ID, instead. If Destination ID and/or Source ID adopt the format of Network ID, the network ID is assigned uniquely to a router or an ED by its parent node, AP or a router. In normal frame transmission, the use of Network ID has better transmission rate than the use of MAC Address because Network ID is shorter than MAC Address. The network ID should be chosen randomly to prevent collision when the EDs recover from disconnected state. More details of Network ID are described in the following paragraphs of Fig.5.

Referring to FIG. 4c, Beacon Frame is used to indicate that, in each of the time slots of Period II of FIG. 2, AP is assigned to transmit or receive the data to or from one of Router 1∼N in Layer 1, and one of Routers 1∼N is assigned to transmit or receive the data to or from one of the router's child EDs in Layer 2. In other words, AP uses AP Beacon, in the format of Beacon Frame, to broadcast time slot assignment to Routers 1∼N, and each of Routers 1∼N uses Router Beacon, in the format of Beacon Frame, to broadcast time slot assignment to its child EDs. For example, Router 2 uses Router Beacon to broadcast time slot assignment of Period II to ED 201∼20n in Period I, so each of the child EDs knows in which time slot it needs to wake up to receive the downlink data or to transmit the uplink data. In FIG. 2, Beacon Frame is used in Period I, but if the start point of Round Period is the end of the duration of AP Beacon, Beacon Frame can be also used in the final time slot of Round Period.

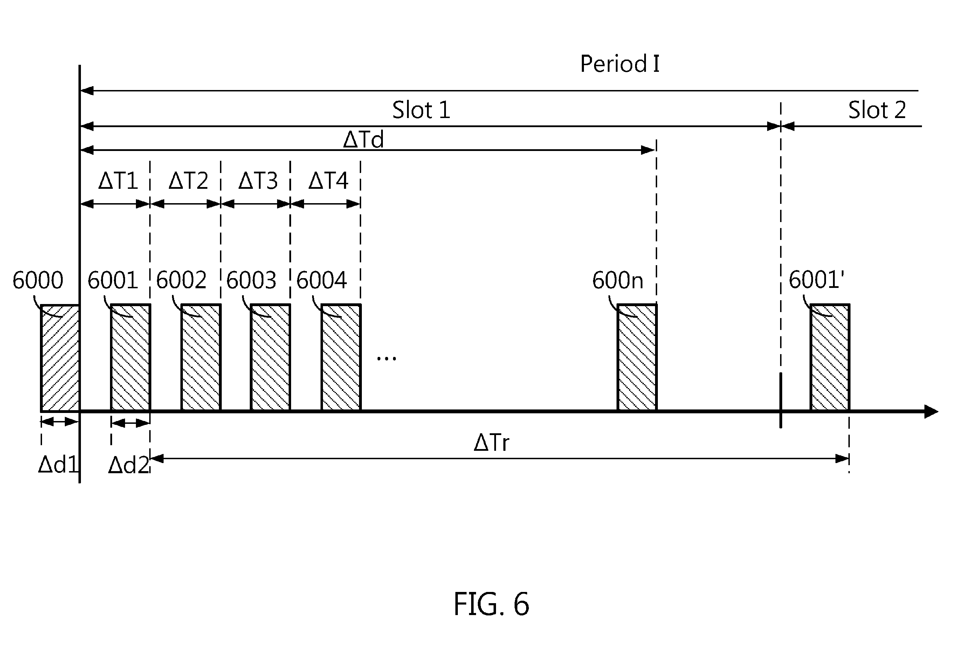

There are at least 7 fields in Beacon Frame: Frame Control, Sequence Number, Source Address, Tree ID, Connection Ticket, Router ID, and Beacon Payload. Frame Control, Sequence Number and Source Address of Beacon Frame are the same as those of Control Frame. Tree ID and Connection Ticket of Beacon Frame are the same as those of Normal Frame. Router ID of Beacon Frame is used to let the child node receiving the beacon calculates the offset of a slice time (a time shift in the time slot). More details of Router ID and the calculation of the slice time are described in the following paragraphs of FIGs. 5 and 6.

As to Beacon Payload of Beacon Frame, there are at least 6 fields in Beacon Payload: Profile ID, Beacon Slot, Total Slot, Slot Info, Current Slot Number, and Downlink Slot Assignment. The field of Profile ID defines the application field, so that the router or the ED will not join the network of different application fields. The field of Beacon Slot indicates the type of the device that transmits the beacon. For example, 000 can be defined as the AP, 001 can be defined as the router, and 010 can be defined as the repeater. In addition, the field of Beacon Slot also indicates the number of time slots that Period I of Fig. 2 has. Next, the field of Total Slot represents the number of the total time slots per Round Period. For example, the maximum value of Total Slot can be 127. The field of Slot Info not only defines the duration of the time slot but also defines a slice time. For example, the duration of the time slot can range from 0.2 to 2 seconds, and the slice time can range from 1ms to 5ms. More details of the slice time are described in the following paragraphs of FIG. 6. The field of Current Slot Number is used to identify the time slot of Period I in which the beacon is sent. The field of Downlink Slot Assignment is used to assign each of the time slots in Period II to a specific router of a specific ED. For example, in FIG. 2, Downlink Slot Assignment of AP Beacon can indicate that, in this round period, slot 4 is assigned to Router 1, so Router 1 will receive the downlink data from the AP in slot 4. Also, Downlink Slot Assignment of Router Beacon can indicate that, in this round period, slot 5 is assigned to ED 303, so ED 303 will wake up in slot 5 and receive the downlink data from its parent Router 3. In addition, the number of the time slots of Period II is bounded by the length of the field of Downlink Slot Assignment. Moreover, each byte (element) of the field of Downlink Slot Assignment in Router Beacon is able to indicate that a specific ED should wake up to receive the downlink data or to transmit the uplink data. However, some bytes can be reserved for other uses. For example, 0x00 can be used to represent inactive assignment. Thus, when the child EDs receive 0x00 in the field of Downlink Slot Assignment in Router Beacon, the child EDs will stay inactive. For example, when Router 5 uses slot 5 of Period II to transmit data to its child EDs, the other EDs, such as the EDs 401∼40n, may need to stay inactive, so Downlink Slot Assignment in Router Beacon of Router 4 will be 0x00. In addition, Oxff can be used to represent broadcast information. Namely, when the child nodes receives Oxff in the field of Downlink Slot Assignment in Router Beacon, all of the child nodes will wake up to wait for data transmission from their parent node. Moreover, Oxfe can be used to represent uplink transmission assignment. Thus, when the child node receive Oxfe in the field of Downlink Slot Assignment in Router Beacon, the child node will wake up to transmit the uplink data to its parent node.

Referring to FIG. 4d, ACK Frame is used for receiving node (receiver) to respond to sending node (sender). Frame Control and Sequence Number of Normal Frame is the same as those of Control Frame. The field of Flow Control is used to indicate that the receiving node is out of resource for further reception. When the sender received ACK with non-zero Flow Control field, it should stop transmitting for a period of time.

Network ID

FIG. 5 is a diagram illustrating a format of Network ID according to one embodiment of the present invention. Referring to FIG. 5, Network ID has two fields, Device ID (DID) and Router ID (RID). The length of each of DID and RID is 1 byte, so the length of Network ID is 2 bytes, shorter than MAC address (6 bytes) and thus reducing overhead. In addition, the value assignment of Network ID of the AP is all 0 in DID and RID. The value assignment of Network ID of a router is 0 in DID and a specific value assigned by the AP in RID. The value assignment of Network ID of an ED is a specific value assigned by the router in DID and a specific value assigned by the AP in RID. Since the length of each of DID and RID is 1 byte, the AP can use RID to tag 256 routers, and each router can use DID to tag 256 EDs. Therefore, the whole two-layer tree network topology can accommodate 256×256 devices.

Beacon Transmission

FIG. 6 is a timing diagram of beacon transmission according to one embodiment of the present invention. Referring to FIG. 6, the duration of AP Beacon 6000 is Δ d1, and the duration of Router Beacons 6001, 6002 ...600n is Δ d2. Specifically, the number of Router Beacons in a time slot is based on the number of the routers in the internal network. Since AP Beacon and Router Beacon adopt the format of Beacon Frame, the duration Δ d1 is the same as the duration Δ d2. In addition, Router Beacon 6001 is sent by Router 1 to EDs 101, 102 ...10n, Router Beacon 6002 is sent by Router 2 to the EDs 201, 202, ...20n, and Router Beacon 6003 is sent by Router 3 to the EDs 301, 302, ...30n, etc. All the router beacons are broadcasted from the parent routers to their child EDs in time slot 1.

Δ d1 and Δ d2 is determined by the length of Beacon Frame and the transmission rate. For example, if the internal network adopts 900MHz to transmit data, the transmission rate is 250K bits/s. Hence, for a beacon bringing 60∼120 Bytes, it takes 1∼5ms to finish the transmission of the beacon, meaning that Δ d1 and Δ d2 range from 1ms to 5ms. Thus, to avoid collision of the router beacons in the second frequency of Layer II, the interval Δ T1, Δ T2, Δ T3, Δ T4 ...Δ Tn needs to be larger than at least 5ms, meaning that AT (Δ T1, Δ T2...) needs to be larger than Δ d (Δ d1 and Δ d2). Specifically, Δ T1, Δ T2, Δ T3, Δ T4 ... can be defined as the same fixed interval, which can be referred to as Slice Time. Moreover, Δ T1 is adjustable according to the initial set up of the device, and Δ T2, Δ T3, Δ T4 ... can still be defined as the same fixed interval, Slice Time. In the aspect of accumulated duration of Router Beacon, the duration of Δ Td of Router Beacon 600n is the sum of Δ T1, Δ T2, Δ T3...Δ Tn. The start point of Δ Td is the start point of Round Period, and the end point of Δ Td is the end of Router Beacon 600n.

In FIG. 6, if the router beacons are transmitted in more than one time slot, the duration between a router beacon and next router beacon received by a specific router is the duration of a time slot. For example, Router Beacon 6001' is the second beacon received by Router 1, and Δ Tr is the duration of Slot 1.

Multiple Beacon Transmission

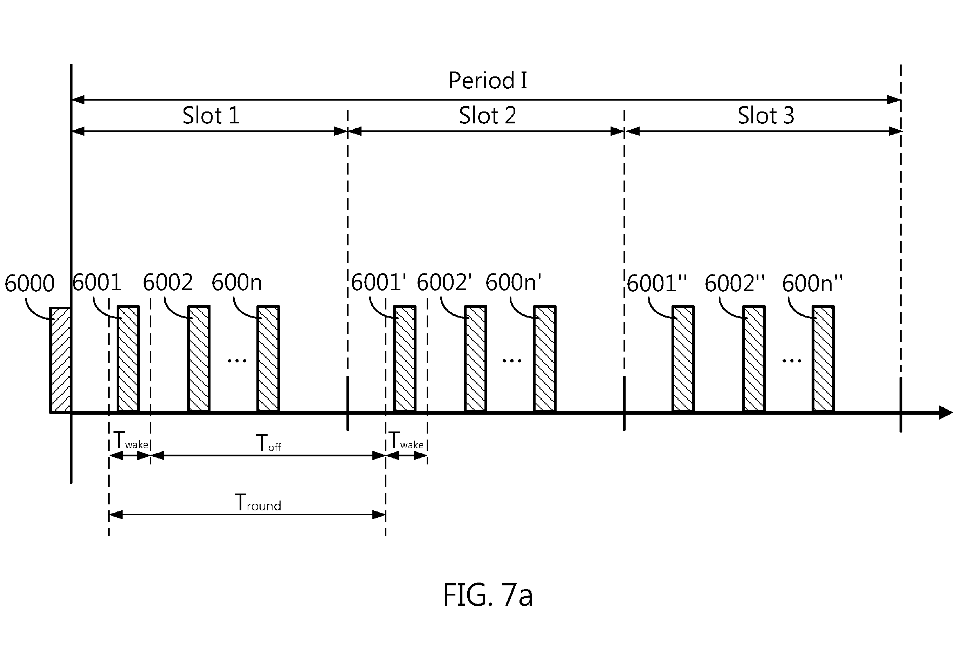

FIG. 7a is a timing diagram of multiple beacon transmission according to one embodiment of the present invention. Referring to FIG. 7a, each time slot in Period I is used to transmit Router Beacons, and the number of the time slots of Period I in FIG. 7a is adjustable. For example, Period I may have 2∼5 time slots.

Regarding the mechanism of multiple beacon transmission, in each time slot of Period I, each router broadcasts a specific beacon to its child EDs. For example, Router Beacons 6001, 6001', 6001" are broadcasted from Router 1 to its child EDs, ED 101∼10n, in Period I. If Router Beacon 600n, 600n', and 600n" represent the router beacons transmitted by Router N, the main difference of Beacon Payload among Router Beacon 600n, 600n', 600n" is the field of Current Slot Number, which is used to identify the time slot that a router beacon of Router N is broadcasted in Period I. The fields of Downlink Slot Assignment in each of Router Beacons 600n, 600n', 600n" are all the same, and Router Beacons 600n, 600n', 600n" are used to assign each of the time slots in Period II to a specific ED of Router N. For example, Router Beacons 6001, 6001', 6001" may indicate that, ED 103 should wake up to receive the downlink data from Router 1 in the first slot of Period II, and ED 107 should wake up to receive the downlink data from Router 1 in the second slot of Period II...etc. In addition, Router Beacons 6001, 6001', 6001" may indicate that, the third slot of Period II is used to let the child EDs of Router 1 transmit the uplink data to Router 1 through CSMA/CA.

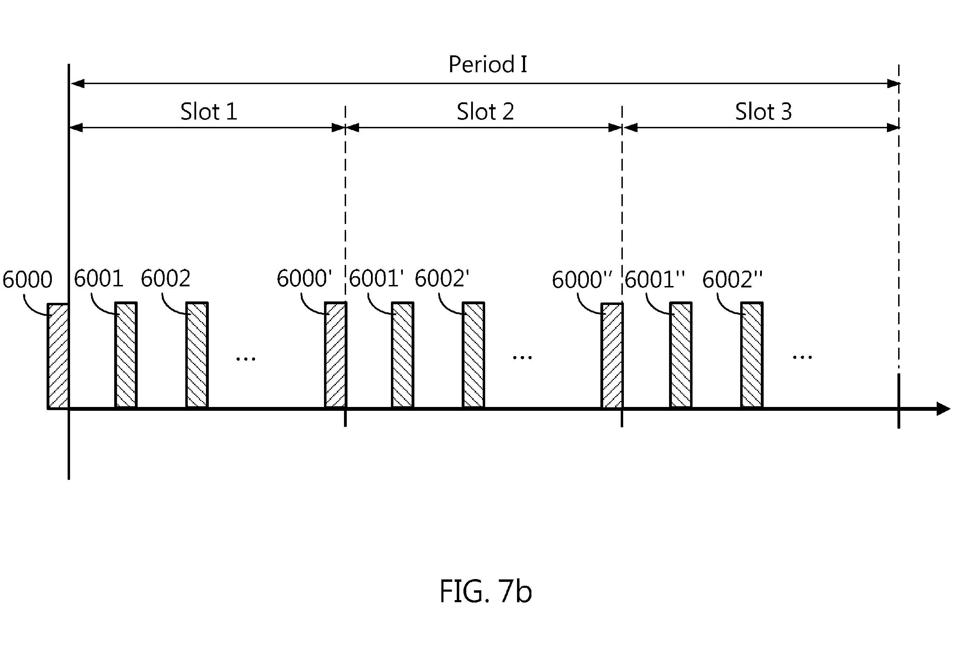

FIG. 7b is a timing diagram of multiple beacon transmission according to another embodiment of the present invention. Referring to FIG. 7b, each time slot in Period I can be also used to transmit AP Beacons, such as AP Beacon 6000' in Slot 1, 6000" in Slot 2. In addition, the end point of each AP Beacon may define the start point of each time slot of Period I. For example, the end point of AP Beacon 6000' defines the start point of Slot 2, and the end point of AP Beacon 6000" defines the start point of Slot 3.

Wake-up Duration of ED Based on Multiple Beacon Transmission

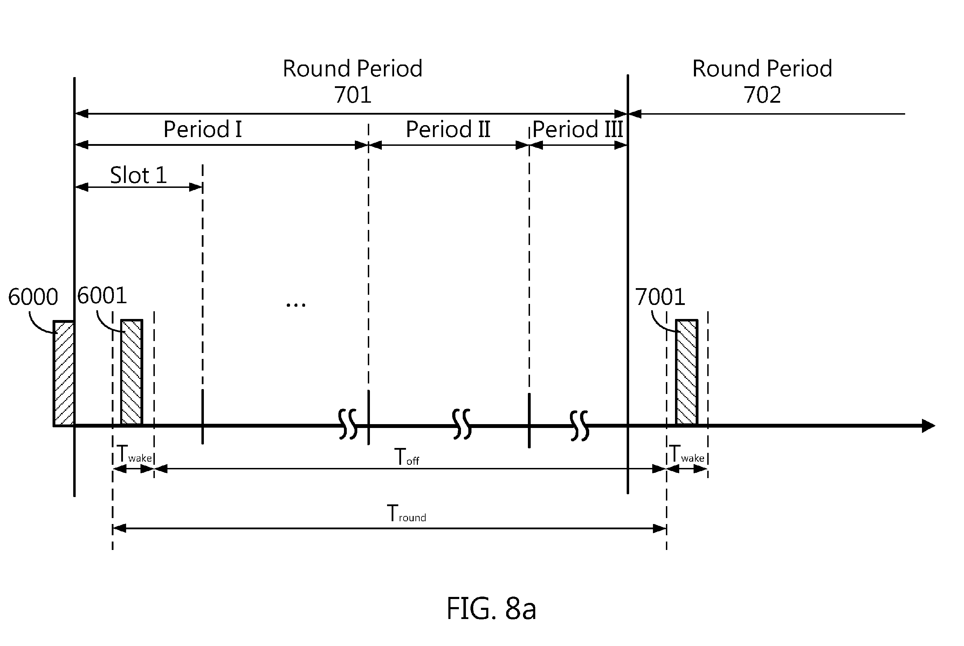

FIGs. 8a∼8b are timing diagrams that illustrate wake-up duration and calibration of an ED based on multiple beacon transmission according to one embodiment of the present invention. Referring to FIG. 8a, T_{wake} is the duration that an ED needs to wake up to receive its parent Router's router beacon. T_{off} is the duration that the ED sleeps, and T_{round} is the sum up of T_{wake} and T_{off}. The duration of T_{round} can be the same as the duration of a round period.

Referring to FIG. 8a, in Slot 1 of Round Period 701, if an ED wake up to receive Router Beacon 6001 in the duration of T_{wake}, the maximum sleep time of the ED is T_{round} - T_{wake}, and the result is T_{off.} If the ED needs to receive the downlink data from its parent router or transmit the uplink data to its parent router in some time slots of Period II, the sleep time of the ED is T_{round} - T_{wake} - (Slot Time) × (the number of time slots that the ED needs to wake up in Period II), wherein Slot Time is defined as the duration of a time slot. In addition, if the ED also needs to transmit the uplink data to its parent router in some time slots of Period III, the sleep time of the ED is T_{round} - T_{wake} - (Slot Time) × (the number of time slots that the ED needs to wake up in Period II) - (Slot Time) × (the number of time slots that the ED needs to wake up in Period III). It should be noticed that, if the ED fails to receive Router Beacon 6001 in Slot 1, the ED needs to wake up till it receives Router Beacon 7001 in Round Period 702, because there is no Router Beacons 6001', 6001" ...in other time slots of Period I.

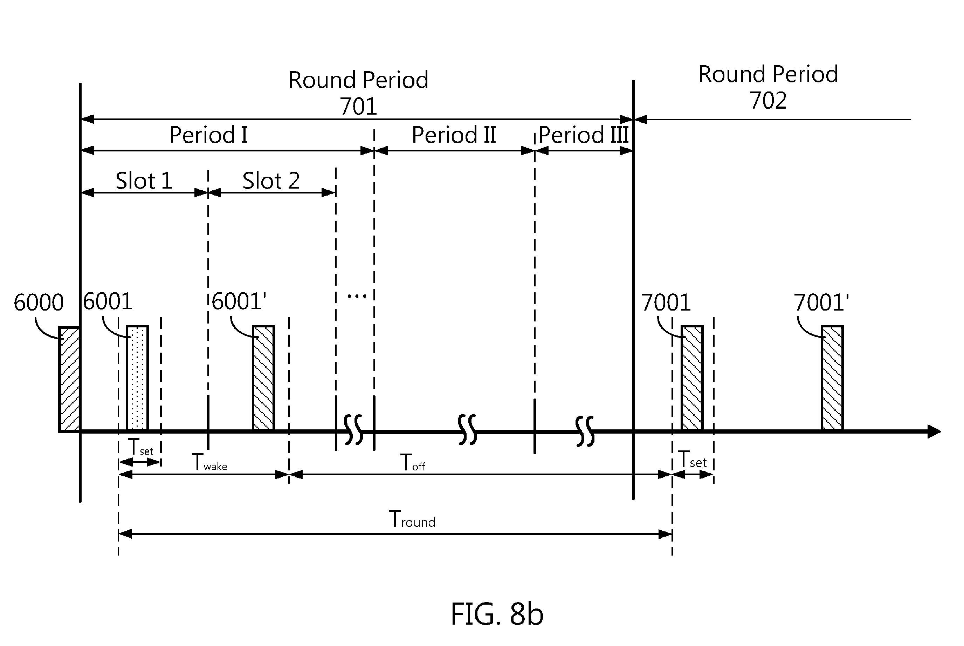

Therefore, referring to FIG. 8b, if the ED fails to receive Router Beacon 6001 in Slot 1, the ED only needs to wake up till the ED receive Router Beacon 6001' in Slot 2 of Round Period 701, and this duration is represented as T_{wake}. Similarly, if the ED fails to receive Router Beacons 6001 and 6001', the ED only needs to wake up till the ED receive Router Beacon 6001" in Slot 3 of Round Period 701. In addition, if Period I has m time slots, each slot can have a corresponding Router Beacon 600n, 600n', 600n"... 600n^{(m-1)'} within its duration. It should be noticed that, it is unnecessary to have a corresponding router beacon in each time slot of Period I, and the number of the router beacons in Period I is adjustable. To sum up, the wake-up duration of an ED can be effectively reduced by the mechanism of multiple beacon transmission, and thus the power consumption of an ED can be effectively reduced.

Calibration of Wake-up Duration

In FIG. 8b, Tₛₑₜ in Slot 1 of Round Period 701 is the original wake-up duration set by the ED, and the duration of Tₛₑₜ is the same as that of T_{wake} of FIG. 8a. In an example of FIG 8b, T_{wake} is longer than Tₛₑₜ because the ED fails to receive Router Beacon 6001 in Slot 1 but successfully receive Router Beacon 6001' in Slot 2. When the ED receives Router Beacon 6001', it will proceed an action of calibration if T_{wake} < (Tₛₑₜ + Slot Time). The reason why T_{wake} < (Tₛₑₜ + Slot Time) is that the timing of the router beacon and that of Tₛₑₜ is asynchronous, causing the ED losses Router Beacon 6001. In the aforementioned case, the duration of Tₛₑₜ will be increased for adjustment. On the other hand, if T_{wake} > (Tₛₑₜ + Slot Time), it implies that there is collision between the router beacon and other packets in the air. Thus, in the case of T_{wake} > (Tₛₑₜ + Slot Time), the duration of Tₛₑₜ needs not to be adjusted. Specifically, the comparison statement can be expanded. If the ED misses N-1 router beacons and receives Router Beacon 600n' in Period I, the comparison is T_{wake} < (Tₛₑₜ + (N-1) × Slot Time). In this case, if T_{wake} < (Tₛₑₜ + (N-1) × Slot Time), the duration of Tₛₑₜ will be increased for adjustment as well. Thus, the ED will be able to receive the first Router Beacon 7001 of the next Round Period 702 if there is no collision between Router Beacon 7001 and other packets in the air.

In a normal condition, the hardware of the ED will try to decrease the duration of Tₛₑₜ until the ED reaches the best set up of the duration of Tₛₑₜ. However, in the aforementioned cases, if T_{wake} < (Tₛₑₜ + Slot Time) or T_{wake} < (Tₛₑₜ + (N-1) × Slot Time), duration of Tₛₑₜ will be increased, so that the ED will not miss the corresponding router beacon, such as Router Beacon 7001 in Slot 1, in the next round period. The range of Tₛₑₜ can be set from 2 ms to 6 ms in some application fields, such as an ESL system. Therefore, the ED is able to self-calibrate through the above comparison and restore the router beacon in the next round period without scan and join process of the internal network.

Null Beacon Transmission

As mentioned in FIG. 1, the internal network has a two-layer tree network topology. If the internal network needs to maintain good connectivity, a router needs to restart if it consecutively misses AP Beacon in several round periods, such as 2 to 3 beacon periods. Once a router restarts due to the aforementioned case, the child EDs of the router will keep in a wake-up status and thus waste power for a period of time. Since all the devices in the internal network, including the AP, routers and EDs, need to be synchronized, the mechanism of null beacon transmission is designed to help the EDs reduce power consumption.

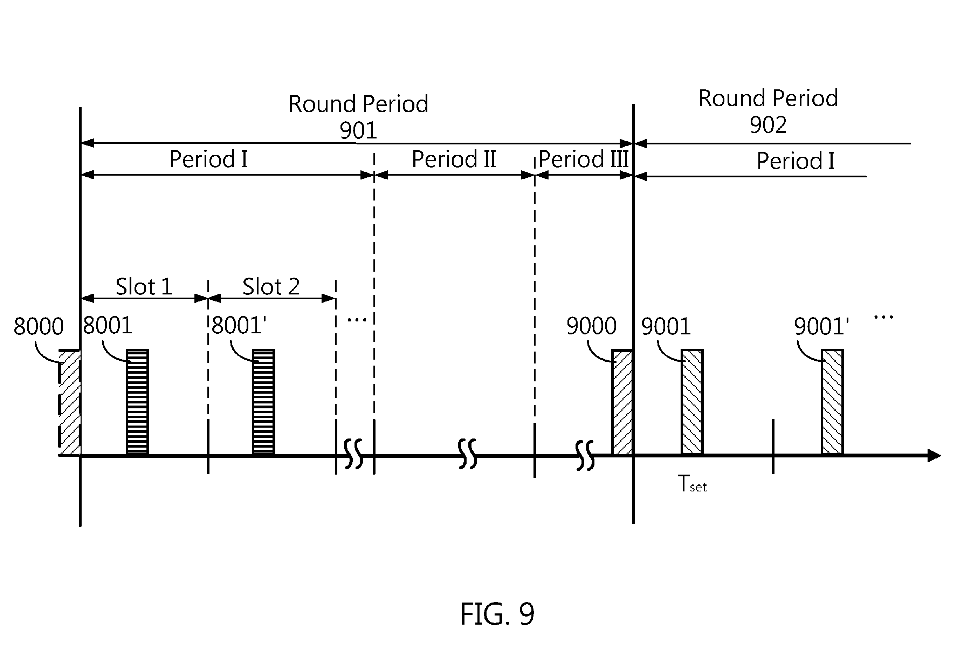

FIG. 9 is a timing diagram of null beacon transmission according to one embodiment of the present invention. Referring to an example of FIG. 9, if AP Beacon 8000 is lost in the air due to collision or interference, Router 101 will fail to receive AP Beacon 8000 and thus broadcast null beacons in Period I of Round Period 901, such as Router Beacon 8001, 8001'...etc. The concept of null beacon transmission is similar to that of multi-beacon transmission, and the main difference is that, in each of the null beacons, the value of payload is 0, meaning that the child EDs need not to wake up in Round Period 901. Thus, in the next Round Period 902, if there is no collision or interference in the air, Router 101 will receive AP Beacon 9000, and Router 101 will broadcast Router Beacon 9001 to its child EDs to let them know which slot they should wake up to receive the downlink data or transmit the uplink data in Period II. In addition, if AP Beacon 9000 is also lost in the air, Router 101 will fail to receive AP Beacon 8000 and thus broadcast null beacons in Period I of Round Period 902, and the payload value of each of Router Beacon 9001, 9001'...etc will be 0. It should be noticed that, the aforementioned case can be applied to all routers in the internal network.

Connection Ticket Based on Null Beacon Transmission

In another aspect, if AP Beacon 8000 is lost due to the restart of the AP, and AP Beacon 9000 is broadcasted by the AP and received by its child routers, the routers will check the field of connection ticket of AP Beacon 9000. If the value of connection ticket of AP Beacon 9000 is that of AP Beacon 8000 plus 1 or is different from that of AP Beacon 8000, the child routers will know that the AP has restarted, and the child routers need to rejoin the internal network. If the routers rejoin the internal network again, their child EDs will need to rejoin as well because the EDs need to be synchronized with the new timing of the internal network. Thus, before the routers confirm that they do need to rejoin the internal network, their child EDs will only receive null beacons broadcasted by their parent routers. More details of rejoin process of the routers can be referred to the description of FIG. 4.

TDMA Mechanism for Downlink Transmission in Dual Frequencies

FIGs. 10a∼10d are schematic illustration of TDMA mechanism for downlink transmission in dual frequencies according to one embodiment of the present invention. To clearly illustrate the mechanism, FIG. 10a is exemplified by a simplified structure of FIG. 1. Referring to FIG. 10a, there are Routers 1∼3 connected to the AP, ED 101 connected to Router 1, ED 201 connected to Router 2, and ED 301 connected to Router 3, constructing a two-layer tree network topology that utilizes a first frequency in Layer 1 and a second frequency in Layer 2. In FIGs. 10a∼10d, each Round Period is set up to have 15 time slots. In addition, Period I has 3 time slots, Period II has 10 time slots, and Period III has 2 time slots.

In FIG. 10a, after connection construction and topology setup, the first Round Period starts and AP broadcasts the first AP beacon containing an element sequence of Downlink Slot Assignment, which indicated that each of the time slots of Period II will be assigned to let AP transmit the downlink data to one of Routers 1∼3, or to let Routers 1∼3 transmit the uplink data to AP. For example, Downlink Slot Assignment has the assignment of {D1, D1, D2, D2, fe, fe, fe, fe, fe, fe}, indicating that Router 1 needs to prepare for receiving the downlink data from AP in Slots 4 and 5 according to the assignment of D1, and Router 2 needs to wake up for receiving the downlink data from AP in Slots 6 and 7 according to the assignment of D2. As to Slot 8 to Slot 13, AP is able to receive the uplink data transmitted by each of Routers 1∼3 according to the assignment of fe (fe is simplified by Oxfe, and more details can be referred to the description of FIG. 4c).

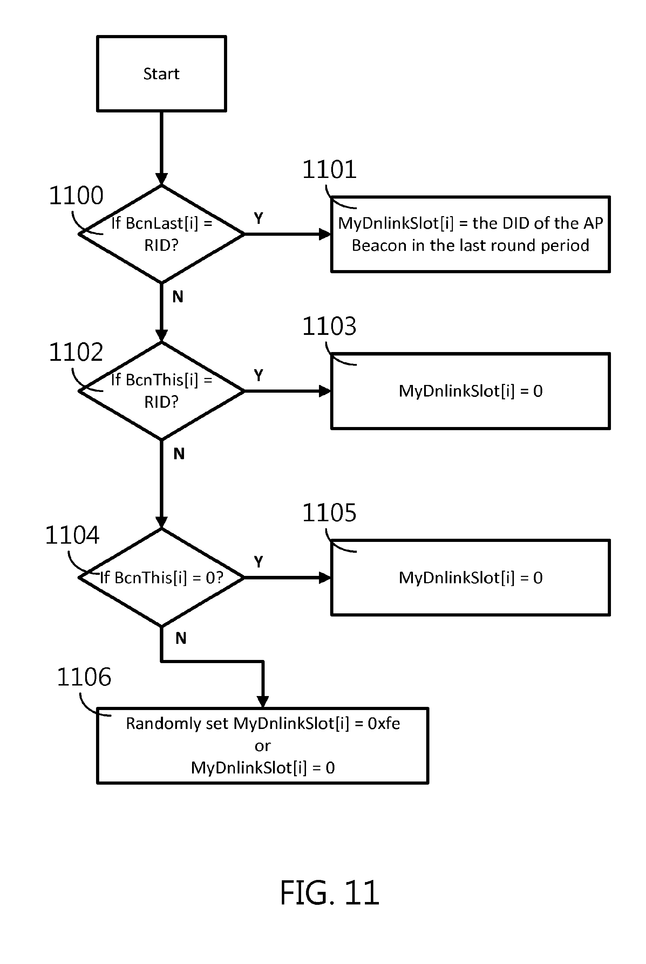

After receiving the first AP Beacon, Router 1 runs Router Slot Assignment algorithm (more details can be referred to the description of FIG. 11) to produce its own router beacon which has the assignment of {0, 0, fe, fe, 0, fe, 0, fe, fe, 0}, indicating that Router 1 is able to receive the downlink data from AP in Slots 4, 5, 8, 10, and 13 according to the assignment of 0 and is able to receive the uplink data from ED 101 in Slots 6, 7, 9, 11, and 12 according to the assignment of fe. It should be noticed that, Router 1 is able to have a pluralities of EDs, and the EDs utilize CSMA/CA to transmit the uplink data to Router 1 in each of Slots 5, 6, 8, 10, and 11.

Similarly, after receiving the first AP Beacon, Router 2 runs Router Slot Assignment algorithm to produce its own router beacon which has the assignment of {fe, 0, 0, 0, fe, 0, fe, fe, 0, 0}, indicating that Router 2 is able to receive the downlink data from AP in Slots 5, 6, 7, 9, 12 and 13 according to the assignment of 0 and is able to receive the uplink data from ED 201 in Slots 4, 8, 10, and 11 according to the assignment of fe. Also, after receiving the first AP Beacon, Router 3 runs Router Slot Assignment algorithm to produce its own router beacon which has the assignment of {0, fe, fe, 0, fe, 0, fe, 0, fe, 0}, indicating that Router 3 is able to receive the downlink data from AP in Slots 4, 7, 9, 11, and 13 according to the assignment of 0 and is able to receive the uplink data from ED 301 in Slots 5, 6, 8, 10 and 12 according to the assignment of fe.

The above router beacons produced by each of Routers 1∼3 are able to transmitted in Slot 1, with each of the router beacons spaced by a slice time A T (the concept can be referred to the description of FIG. 6). In addition, each of Routers 1∼3 can repeatedly transmit the router beacon in each of Slot 1∼3, respectively, and each router beacon transmitted by a specific router has the same element sequence of Downlink Slot Assignment, forming a substantial multi-beacon transmission in Period I. For example, Router 1 can broadcast its router beacon in each of Slot 1∼3, so there are three router beacons broadcasted by Router 1 in Period I.

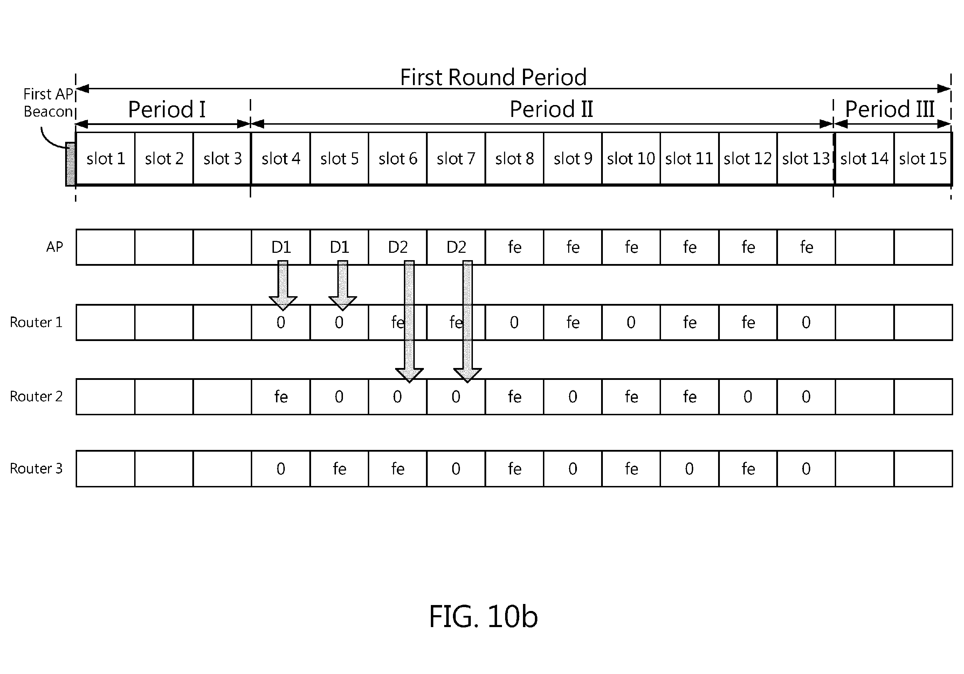

Referring to FIG. 10b, AP transmits the downlink data to Router 1 in Slots 4 and 5 according to the assignment of D1, and the AP transmits the downlink data to Router 2 in Slots 6 and 7 according to the assignment of D2. It should be noticed that, since Slots 4 and 5 are assigned for AP to transmit the downlink data to Router 1, Routers 2 and 3 are not able to receive the downlink data from AP in Slots 4 and 5. Similarly, since Slots 6 and 7 are assigned for AP to transmit the downlink data to Router 2, Routers 1 and 3 are not able to receive the downlink data from AP in Slots 6 and 7. To sum up, the element sequence in the field of Downlink Slot Assignment of the first AP Beacon decides which router should receive the downlink data from AP in which time slot in Period II.

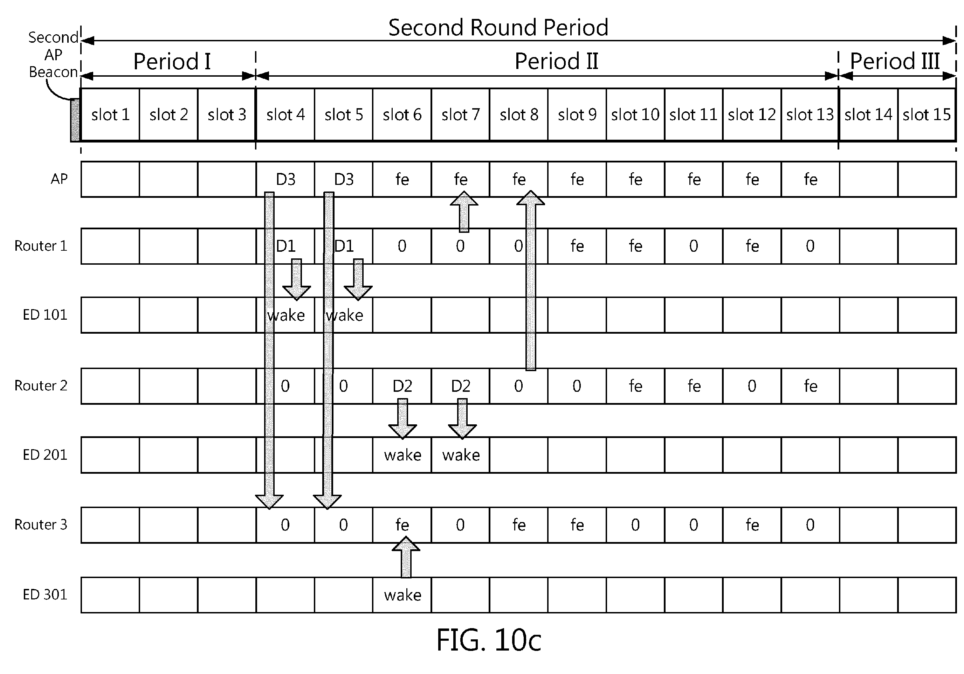

Referring to FIG. 10c, after the first Round Period, the second Round Period starts and AP broadcasts the second AP beacon containing an element sequence of Downlink Slot Assignment. Downlink Slot Assignment of the second AP Beacon has the assignment of {D3, D3, fe, fe, fe, fe, fe, fe, fe, fe}, indicating that Router 3 needs to prepare for receiving the downlink data from AP in Slots 4 and 5 according to the assignment of D3. As to Slots 6 to 13, AP is able to receive the uplink data transmitted by each of Routers 1∼3 according to the assignment of fe.

After receiving the second AP Beacon, Router 1 runs Router Slot Assignment algorithm to produce its own router beacon which has the assignment of {D1, D1, 0, 0, 0, fe, fe, 0, fe, 0}, indicating that Router 1 needs to transmit the downlink data received from AP to ED 101 in Slots 4 and 5, and thus ED 101 needs to wake up in Slots 4 and 5. It should be noticed that, Router 1 is able to have a pluralities of EDs, and it can decide which ED should receive the downlink data from Router 1 based on D1 in Downlink Slot Assignment of the first AP Beacon.

In addition, the assignment of {D1, D1, 0, 0, 0, fe, fe, 0, fe, 0} indicates that Router 1 is able to receive the downlink data from AP in Slots 6, 7, 8, 11, and 13 according to the assignment of 0 and is able to receive the uplink data from ED 101 in Slots 9, 10 and 12 according to the assignment of fe.

Similarly, after receiving the second AP Beacon, Router 2 runs Router Slot Assignment algorithm to produce its own router beacon which has the assignment of {0, 0, D2, D2, 0, 0, fe, fe, 0, fe}, indicating that Router 2 needs to transmit the downlink data received from AP to ED 201 in Slots 6 and 7, and thus ED 201 needs to wake up in Slots 6 and 7. It should be noticed that, Router 2 is able to have a pluralities of EDs, and it can decide which ED should receive the downlink data from Router 1 based on D1 in Downlink Slot Assignment of the first AP Beacon.

In addition, the assignment of {0, 0, D2, D2, 0, 0, fe, fe, 0, fe} indicates that Router 2 is able to receive the downlink data from AP in Slots 4, 5, 8, 9, and 12 according to the assignment of 0 and is able to receive the uplink data from ED 201 in Slots 10, 11 and 13 according to the assignment of fe.

Similarly, after receiving the second AP Beacon, Router 3 runs Router Slot Assignment algorithm to produce its own router beacon which has the assignment of {0, 0, fe, 0, fe, fe, 0, 0, fe, 0}, indicating that Router 3 is able to receive the downlink data from AP in Slots 4, 5, 7, 10, 11 and 13 according to the assignment of 0 and is able to receive the uplink data from ED 301 in Slots 6, 8, 9 and 12 according to the assignment of fe. It should be noticed that Router 3 is able to have a pluralities of EDs as well.

Therefore, in Slots 4 and 5 of the second Round Period, AP utilizes the first frequency to transmit the downlink data to Router 3, and Router 1 utilize the second frequency to transmit the downlink data to ED 101, realizing downlink transmission in dual frequencies in Period II and thus improving the transmission rate of the internal network under TDMA mechanism in Period II of Round Period. It should be noticed that, the concept of downlink transmission in dual frequencies under TDMA mechanism remains the same in Period II of Round Period regardless of the number of the routers and that of the EDs.

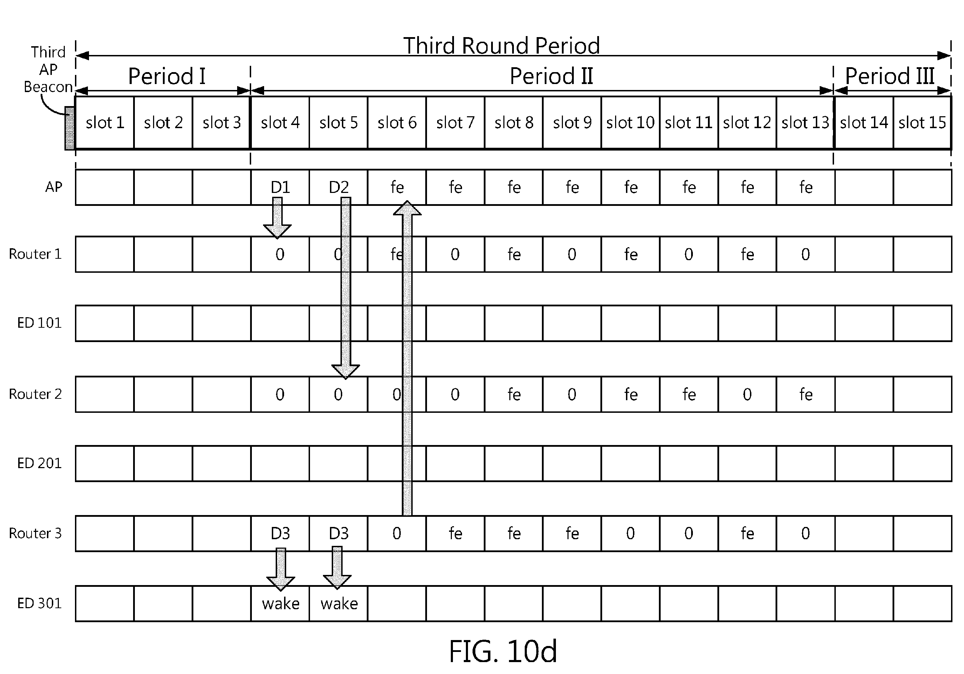

Referring to FIG. 10d, after the second Round Period, the third Round Period starts and AP broadcasts the third AP beacon containing an element sequence of Downlink Slot Assignment. Downlink Slot Assignment of the third AP Beacon has the assignment of {D1, D2, fe, fe, fe, fe, fe, fe, fe, fe}, indicating that Router 1 needs to prepare for receiving the downlink data from AP in Slot 4 according to the assignment of D1 and Router 2 needs to prepare for receiving the downlink data from AP in Slot 5 according to the assignment of D2. As to Slots 6 to 13, AP is able to receive the uplink data transmitted by each of Routers 1∼3 according to the assignment of fe.

After receiving the third AP Beacon, Router 1 runs Router Slot Assignment algorithm to produce its own router beacon which has the assignment of {0, 0, fe, 0, fe, 0, fe, 0, fe, 0}, indicating that Router 1 is able to receive the downlink data from AP in Slots 4, 5, 7, 9, 11 and 13 according to the assignment of 0 and is able to receive the uplink data from ED 101 in Slots 6, 8, 10 and 12 according to the assignment of fe. Hence, Router 1 receives the downlink data transmitted from AP in Slot 4 of the third Round Period.

Similarly, After receiving the third AP Beacon, Router 2 runs Router Slot Assignment algorithm to produce its own router beacon which has the assignment of {0, 0, 0, 0, fe, 0, fe, fe, 0, fe}, indicating that Router 2 is able to receive the downlink data from AP in Slots 4, 5, 6, 7, 9 and 12 according to the assignment of 0 and is able to receive the uplink data from ED 201 in Slots 8, 10, 11 and 13 according to the assignment of fe. Hence, Router 2 receives the downlink data transmitted from AP in Slot 5 of the third Round Period.

Similarly, after receiving the third AP Beacon, Router 3 runs Router Slot Assignment algorithm to produce its own router beacon which has the assignment of {D3, D3, 0, fe, fe, fe, 0, 0, fe, 0}, indicating that Router 3 needs to transmit the downlink data received from AP to ED 301 in Slots 4 and 5, and thus ED 301 needs to wake up in Slots 4 and 5. It should be noticed that, Router 3 is able to have a pluralities of EDs, and it can decide which ED should receive the downlink data from Router 3 based on D3 in Downlink Slot Assignment of the second AP Beacon.

In addition, the assignment of {D3, D3, 0, fe, fe, fe, 0, 0, fe, 0} indicates that Router 3 is able to receive the downlink data from AP in Slots 6, 10, 11, and 13 according to the assignment of 0 and is able to receive the uplink data from ED 301 in Slots 7, 8, 9 and 12 according to the assignment of fe.

Therefore, in Slots 4 and 5 of the second Round Period, AP utilizes the first frequency to transmit the downlink data to Routers 1 and 2, and Router 3 utilize the second frequency to transmit the downlink data to ED 301, realizing downlink transmission in dual frequencies in Period II and thus improving the transmission rate of the internal network under TDMA mechanism in Period II of Round Period.

CDMA/CA Mechanism for Uplink Transmission in Dual Frequencies

In FIGs. 10c and 10d, uplink transmission in dual frequencies under CDMA/CA mechanism is depicted. In the second Round Period of FIG. 10c, ED 301 wakes up in Slot 6 and utilizes the second frequency to transmit the uplink data to Router 3 according to the assignment of fe in Downlink Slot Assignment {0, 0, fe, 0, fe, fe, 0, 0, fe, 0} of Router 3. If there is a plurality of child EDs 301, 302...30n, these EDs will still utilize CDMA/CA, in Slot 6, to decide which ED can utilizes the second frequency to transmit the uplink data to Router 3. Then, in the third Round Period of FIG. 10d, Router 3 utilizes the first frequency to transmit the uplink data to Router 3 in Slot according to the assignment of fe in Downlink Slot Assignment {D1, D2, fe, fe, fe, fe, fe, fe, fe, fe } of the AP. If there is a plurality of Routers 1, 2 ...n, these routers will still utilize CDMA/CA, in Slot 6, to decide which Router can utilizes the first frequency to transmit the uplink data to the AP. In general, in both of Layer 1 and Layer 2 of the internal network, if there is at least one parent nodes having fe in its field Downlink Slot Assignment, the child nodes are able to utilize CDMA/CA to transmit the uplink data to the parent node, especially in Period II and Period III of Round Period. The difference is that the first frequency is utilized for uplink transmission in Layer I, and the second frequency is utilized for uplink transmission in Layer II.

Router Slot Assignment Algorithm

FIG. 11 is a flow chart of Router Slot Assignment algorithm according to one embodiment of the present invention. Referring to FIG. 11, BcnLast is a matrix that stores the element sequence of the field of Downlink Slot Assignment of AP Beacon in the last Round Period, and BcnLast[i] is the i^{th} element in the field of Downlink Slot Assignment of AP Beacon in the last Round Period. Similarly, BcnThis is a matrix that stores the element sequence of the field of Downlink Slot Assignment of AP Beacon in the present Round Period, and BcnThis[i] is the i^{th} element in the field of Downlink Slot Assignment of AP Beacon in the present Round Period. In addition, as the description of FIG. 5 illustrates, RID represents Router ID, and DID represents Device ID. Finally, MyDnlinkSlot is the output of Router Slot Assignment algorithm, and the aforementioned output is an element sequence of Downlink Slot Assignment of Router Beacon for the present Round Period. MyDnlinkSlot[i] is the i^{th} element in the field of Downlink Slot Assignment of Router Beacon for the present Round Period.

Thus, to decide each element in the field of Downlink Slot Assignment of Router Beacon for the present Round Period, FIG. 11 illustrates how to decide the value of MyDnlinkSlot[i], and the number i goes from 1 to the last number of the element in Downlink Slot Assignment of Router Beacon. For example, in FIGs. 10a∼d, the number i goes from 1 to 15 (or from 0 to 14). In Step 1100, if BcnLast[i] is equal to RID, MyDnlinkSlot[i] will be set to be equal to the assigned DID transmitted from AP, the assigned DID transmitted in the i^{th} time slot of Period II of the last Round Period in Step 1101. Namely, if AP transmits the downlink data to a specific router in a specific time slot in Period II of the last Round Period, the specific time slot needs to be reserved for the specific router to transmit the downlink data to the assigned ED in the second frequency in Period II of the present Round Period. For example, in FIG. 10b, Slot 4 is used for AP to transmit the downlink data to Router 1 in the first round period. So, in FIG. 10c, Slot 4 is reserved for Router 1 to transmit the downlink data to a specific ED, such as ED 101.

If BcnLast[i] is not equal to RID, the process will go directly to Step 1102. In step 1102, if BcnThis[i] is equal to RID, MyDnlinkSlot[i] will be set to be equal to 0 in Step 1103. Namely, if AP transmits the downlink data to a specific router in a specific time slot in Period II of the present Round Period, the child EDs of the specific router can only sleep and cannot transmit the uplink data to the specific router in the specific time slot. In the aforementioned specific time slot, the specific router works in the first frequency. For example, in FIG. 10c, the 1^{th} element of Downlink Slot Assignment of Router Beacon of Router 3 is 0, so AP is able to transmit the downlink data to Router 3 in the first frequency in Slot 4, and each of the child EDs of Router 3, such as ED 301, is unable to wake up to transmit the uplink data to Router 3.

If BcnThis[i] is not equal to RID, the process will go directly to Step 1104. In step 1104, if BcnThis[i] is equal to 0, MyDnlinkSlot[i] will be set to be equal to 0 in Step 1105. Namely, in the present Round Period, if MyDnlinkSlot[i] is equal to 0, the child EDs of a specific router cannot transmit the uplink data to the specific router in the i^{th} time slot of Period II of the present Round Period. In the aforementioned case, AP may transmit the downlink data to one of the other routers in the first frequency, so the specific router may work in the second frequency and does not allow uplink transmission from its child EDs.

If BcnThis[i] is not equal to 0, the process will go directly to Step 1106. In step 1106, MyDnlinkSlot[i] will be randomly set to be equal to 0 or Oxfe. Namely, there is 50% opportunity for the specific router to transmit the downlink data to one of its child EDs or receive the uplink data from one of its child EDs, in the i^{th} time slot of Period II of the present Round Period.

ESL System Utilizing Time-Slotted Wireless Communication in Dual Frequencies

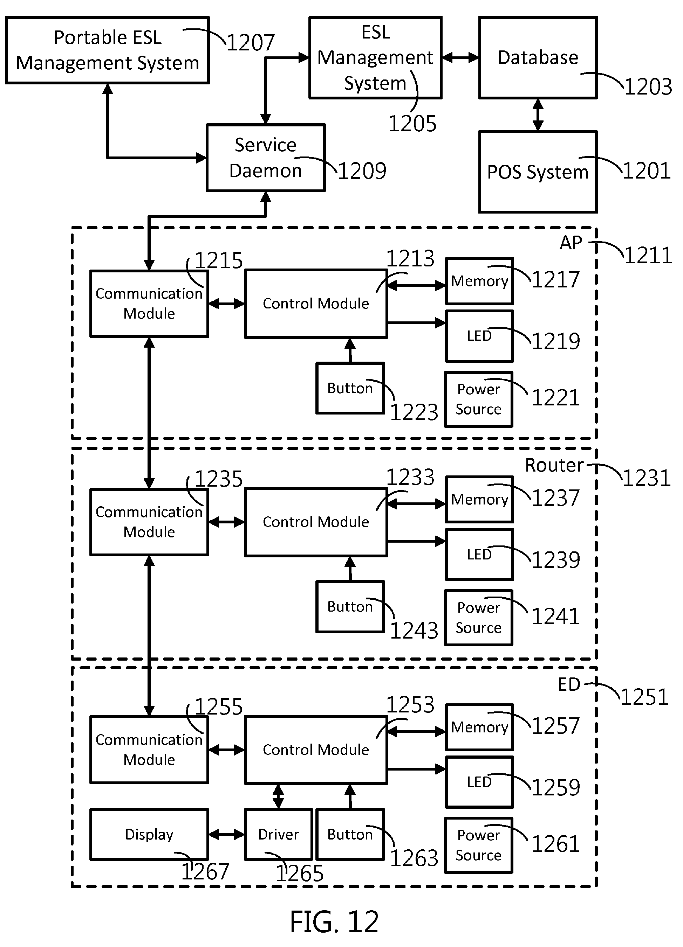

FIG. 12 is a schematic illustration of an ESL system utilizing time-slotted wireless communication in dual frequencies according to one embodiment of the present invention. Referring to FIG. 12, the internal network is implemented in an ESL system, wherein AP 1211 communicates with Router 1231 using a first frequency and Router 1231 communicates with ED 1251 using a second frequency. Each ED is an electronic shelf label (ESL). Also, it should be noticed that the internal network is able to have at least one routers and each router is able to have at least one EDs, as depicted in FIG. 1. The following paragraphs introduce the schematic illustration of an ESL system in a bottom-up way.

A plurality of EDs 1251 typically display prices of corresponding merchandise items on store shelves and are typically attached to a rail along the leading edge of the shelves. Other than price, the information on the display of an ED may include the barcode, name, logo, figure of the corresponding merchandise. ED 1251 includes control module 1253, communication module 1255, memory 1257, LED 1259, power source 1261, button 1263, driver 1265, and display 1267.

Control module 1253 controls operation of ED 1251. Control module 1253 receives messages from ESL management system 1205 (or portable ESL management system 1207) and executes commands in the messages. Control module 1253 sends responses to ESL management system 1205 (or portable ESL management system 1207). Control module 1253 controls display 1267 by driver 1265. Display 1267 may be a liquid crystal display (LCD) or a non-volatile display. Control module 1253 controls storage of display data in memory 1257. Specifically, Control module 1253 is configured to buffer downlink data in memory 1257. Also, Control module 1253 can be configured to buffer uplink data in memory 1257. Memory 1257 stores display and other information, and SRAM may be one type of Memory 1257. Button 1263 provides input of customer service that can be defined in different scenarios, and there may be at least one button 1263 on ED 1251. Once button 1263 is pressed, ESL management system 1205 will get the corresponding messages from ED 1251. LED is controlled by control module 1253 and is used to reflect any possible errors on ED 1251. Power source 1261 is used to provide power to all the modules and components in ED 1251.

Communication module 1255 receives the downlink data from Router 1231 or transmits the uplink data to Router 1231 in the second frequency. In addition, communication module 1255 utilizes TDMA to receive the downlink data and utilizes CDMA/CA to transmit the uplink data under time-slotted mechanism.

A plurality of Routers 1231 are typically placed around store shelves and are used to build downlink and uplink channels between AP 1231 and a plurality of EDs 1251. ED 1251 includes control module 1233, communication module 1235, memory 1237, LED 1239, power source 1241, and button 1243.

Control module 1233 controls operation of Router 1231 and controls storage of data in memory 1237. Specifically, Control module 1233 is configured to buffer the downlink data and the uplink data in memory 1237. Memory 1237 stores display and other information. Button 1243 provides input of management service that can be defined in different scenarios, and there may be at least one button 1243 on Router 1231. LED 1239 is controlled by control module 1233 and is used to reflect any possible errors on Router 1231. Power source 1241 is used to provide power to all the modules and components in Router 1231.

Communication module 1235 receives the downlink data from AP 1211 or transmits the uplink data to AP 1211 in the first frequency, and it also receives the uplink data from ED 1251 or transmits the downlink data to ED 1251 in the second frequency. In addition, communication module 1235 utilizes TDMA to receive and transmit the downlink data and utilizes CDMA/CA to receive and transmit the uplink data under time-slotted mechanism. It should be noticed that communication module 1235 may be only limited to (1) receive the downlink data in the first frequency, (2) transmit the uplink data in the first frequency, (3) receive the uplink data in the second frequency, or (4) transmit the downlink data in the second frequency, in each of the time slots in Period II of Round Period.

AP 1211 is typically placed near the management center in the market and is used to build downlink and uplink channels between the internal network and ESL management system 1205 (or portable ESL management system 1207). AP 1211 includes control module 1213, communication module 1215, memory 1217, LED 1219, power source 1221, and button 1223.

Control module 1213 controls operation of AP 1211 and controls storage of data in memory 1217. Specifically, Control module 1213 is configured to buffer the downlink data in memory 1217. Memory 1217 stores display and other information. Button 1213 provides input of management service that can be defined in different scenarios, and there may be at least one button 1213 on AP 1211. LED 1219 is controlled by control module 1213 and is used to reflect any possible errors on AP 1211. Power source 1221 is used to provide power to all the modules and components in AP 1211.

Communication module 1215 receives the downlink data from ESL Management System 1205 (or portable ESL management system 1207) or transmits the uplink data to ESL Management System 1205 (or portable ESL management system 1207) through the Internet by utilizing WiFi or TCP/IP in wired or wireless way, and it also receives the uplink data from Router 1231 or transmits the downlink data to Router 1231 in the first frequency. Communication module may be formed by different sub-modules handling different communication channels.

In addition, communication module 1215 utilizes TDMA to transmit the downlink data and utilizes CDMA/CA to receive the uplink data under time-slotted mechanism. It should be noticed that communication module 1215 may be only limited to either transmit the downlink data or receive the uplink data in the first frequency in each of the time slots in Period II of Round Period.

Service Daemon 1209 AP 1211 is typically placed near the management center in the market and is used to continuously record all the status in the internal network by using specific software.

ESL Management System 1205 is also typically placed near the management center in the market and is used to manage and update the data of EDs in the internal network. Service Daemon 1209 AP 1211 and ESL Management System 1205 may be integrated into a single management system. In addition, the function of portable ESL management system 1207 is the same as that of ESL Management System 1205. Portable ESL management system 1207 can be realized in many kinds of mobile devices, such as tablet or iPad.

Finally, Database 1203 is used to store the numbers, prices and other information of all the merchandise items, and a POS (point-of-sale) system is able to connect with Database 1203. In FIG. 12, the internal network includes AP 1211, at least one Router 1231, and at least one ED 1251. The ESL system includes the internal network, Service Daemon 1209, ESL Management System 1205, Portable Management System 1207 and Database 1203. The ESL system is able to connect with POS system to provide a complete service for the market.

Thus, if Round Period is set up to have 30 time slots, with each slot having 0.5 seconds, each Round Period will be 15 seconds. In this case, Period I is set up to have 3 time slots, Period II is set up to have 25 time slots, and Period III is set up to have 2 time slots. So, based on the above, in a normal case, the internal network is able to finish 25 EDs' information update in 15 seconds, leading to finish 6000 EDs' update in one hour. In a worst case, all target EDs are the child nodes of the same router, and the router can only operation in one transmission direction, leading to finish 3000 EDs' update in one hour.

Previous descriptions are only embodiments of the present invention and are not intended to limit the scope of the present invention. Many variations and modifications according to the claims and specification of the disclosure are still within the scope of the claimed invention. In addition, each of the embodiments and claims does not have to achieve all the advantages or characteristics disclosed. Moreover, the abstract and the title only serve to facilitate searching patent documents and are not intended in any way to limit the scope of the claimed invention.

## Claims

1. A wireless network system employing dual frequencies mechanism, comprising:
an access point having a first communication module, wherein the first communication module transmits downlink data and receives uplink data wirelessly in a first frequency;
a plurality of routers, each having a second communication module, wherein
the second communication module (1) receives the downlink data from the access point and transmits the uplink data to the access point wirelessly in the first frequency and (2) transmits the downlink data and receives the uplink data wirelessly in a second frequency; and
a plurality of end devices, each having a third communication module, wherein
the third communication module receives the downlink data from one of the plurality of routers and transmits the uplink data to the same one of the plurality of routers wirelessly in the second frequency, and
wherein an internal network is formed by the access point, the plurality of routers and the plurality of end devices, with the access point being a parent node of the routers and each of the routers being a parent node of a subgroup of the plurality of end devices, forming a two-layer tree network topology.

2. The wireless network system of claim 1, wherein the time-slotted mechanism divides a round period into at least a first period and a second period, each of the periods having multiple time slots, and wherein the beacons are broadcasted from one of the parent nodes to its child nodes during the first period.

3. The wireless network system of claim 2, wherein in each of the time slots of the first period, an interval between end points of two neighboring beacons broadcasted by two different routers, Δ T, is set up to a slice time in order to avoid collision of the router beacons in the second frequency.

4. The wireless network system of claim 1, 2 or 3, wherein the time-slotted mechanism divides a round period into at least a first period and a second period, each of the periods having multiple time slots, and wherein the downlink data is transmitted from one of the parent nodes to its child nodes and the uplink data is transmitted from one of the child nodes to its parent node during the second period.

5. The wireless network system of claim 4, wherein the downlink data is transmitted by TDMA mechanism in the second period of the round period.

6. The wireless network system of claim 4, wherein the uplink data is transmitted by CSMA/CA mechanism in the second period of the round period.

7. The wireless network system of any preceding claim, wherein the time-slotted mechanism divides a round period into a first period, a second period and a third period, each of the periods having multiple time slots, and wherein the uplink data is transmitted to the parent node from one of its child nodes during the third period.

8. The wireless network system of claim 7, wherein the uplink data is transmitted by CSMA/CA mechanism in the third period of the round period.

9. The wireless network system of any preceding claim, wherein the plurality of end devices are electronic shelf labels.

10. The wireless network system of claim 9, wherein a management system is set up to manage and update the uplink and downlink data of the plurality of electronic shelf labels in the internal network.

11. The wireless network system of any preceding claim, wherein the first frequency and the second frequency are lower than 1000MHz, and the first frequency is different from the second frequency.

12. The wireless network system of any preceding claim, wherein the downlink data and the uplink data are able to adopt a normal frame, wherein part of the normal frame adopts a format of network ID.

13. A method utilizing dual frequencies to transmit downlink data under TDMA mechanism that divides a round period into at least a first period and a second period, each of the periods having multiple time slots, the method comprising:
a) wirelessly broadcasting an AP beacon from an access point to a plurality of routers in a first period of a first round period, the AP beacon containing a first element sequence of downlink slot assignment and broadcasted in a first frequency;
b) wirelessly transmitting the downlink data from the access point to one of the routers in each of the time slots of a second period of the first round period according to the first element sequence of downlink slot assignment, the downlink data transmitted in the first frequency;
c) wirelessly broadcasting a router beacon from one of the routers to the router's end devices in a first period of a second round period, the router beacon containing a second element sequence of downlink slot assignment and broadcasted in a second frequency; and
d) wirelessly transmitting the downlink data from one of the routers to one of the router's end devices in each of the time slots of a second period of the second round period according to the second element sequence of downlink slot assignment, the downlink data transmitted in the second frequency.

14. The method of claim 13, wherein uplink data is transmitted by CSMA/CA mechanism during the second period, the uplink data transmitted to the AP from one of the routers or to one of the routers from one of the router's end devices.

15. The method of claim 13 or 14, wherein the round period has a third period during which uplink data is transmitted by CSMA/CA mechanism, the uplink data transmitted to the AP from one of the routers or to one of the routers from one of the router's end devices.

16. The method of claim 13, 14 or 15, wherein the second element sequence of downlink slot assignment is produced by a router slot assignment algorithm.

17. The method of any of claims 13 to 16, wherein the end devices are electronic shelf labels

18. The method of any of claims 13 to 17, wherein the first frequency and the second frequency are lower than 1000MHz, and the first frequency is different from the second frequency.

19. The method of any of claims 13 to 18, wherein the downlink data is able to adopt a normal frame, wherein part of the normal frame adopts a format of network ID.

20. The method of any of claims 13 to 19, wherein in each of the time slots of the first period of the first or second round period, the interval between the start points of two neighboring router beacons broadcasted by two different routers, Δ T, is set up to a slice time in order to avoid collision of the router beacons in the second frequency.

21. A router in a wireless network system utilizing dual frequencies, comprising:
a communication module wirelessly communicating with an access point and at least one end device, wherein the communication module (1) wirelessly receives downlink data from the access point in a first frequency and (2) wirelessly transmits the downlink data to the at least one end device in a second frequency;
a memory; and
a control module electrically connected the communication module and the memory, wherein the control module is configured to buffer the downlink data in the memory.

22. The router of claim 21, wherein an internal network is formed by the access point, the router and the at least one end device, with the access point being a parent node of the router and the router being a parent node of the at least one end device, forming a two-layer tree network topology.

23. The router of claim 22, wherein the time-slotted mechanism divides a round period into at least a first period and a second period, each of the periods having multiple time slots, and wherein beacons are broadcasted from the parent node to its child node during the first period.

24. The router of claim 22 or 23, wherein the time-slotted mechanism divides a round period into at least a first period and a second period, each of the periods having multiple time slots, and wherein the downlink data is transmitted from the parent node to its child node and the uplink data is transmitted from the child node to its parent node during the second period.

25. The router of claim 24, wherein the downlink data is transmitted by TDMA mechanism in the second period of the round period.

26. The router of claim 24, wherein the uplink data is transmitted by CSMA/CA mechanism in the second period of the round period.

27. The router of any of claims 22 to 26, wherein the time-slotted mechanism divides a round period into a first period, a second period and a third period, each of the periods having multiple time slots, and wherein the uplink data is transmitted to the parent node from its child node during the third period.

28. The router of claim 27, wherein the uplink data is transmitted by CSMA/CA mechanism in the third period of the round period.

29. The router of any of claims 21 to 28, wherein the at least one end device is an electronic shelf label.

30. The router of any of claims 21 to 29, wherein the first frequency and the second frequency are lower than 1000MHz, and the first frequency is different from the second frequency.

31. A method utilizing dual frequencies to receive and transmit downlink data under TDMA mechanism that divides a round period into at least a first period and a second period, each of the periods having multiple time slots, the method comprising:
a) wirelessly receiving an AP beacon from an access point in a first period of a first round period, the AP beacon containing a first element sequence of downlink slot assignment and broadcasted in a first frequency;
b) wirelessly receiving the downlink data from the access point in each of the time slots of a second period of the first round period according to the first element sequence of downlink slot assignment, the downlink data transmitted in the first frequency;
c) wirelessly broadcasting a router beacon to a plurality of end devices in a first period of a second round period, the router beacon containing a second element sequence of downlink slot assignment and broadcasted in a second frequency; and
d) wirelessly transmitting the downlink data to one of the plurality of end devices in each of the time slots of a second period of the second round period according to the second element sequence of downlink slot assignment, the downlink data transmitted in the second frequency.
